# EUROPEAN PATENT APPLICATION

(11) **EP 4 694 347 A1**
(43) Date of publication of application: **11.02.2026**
(21) Application number: 24784045.7
(22) Date of filing: 15.03.2024
(51) Int. Cl.: H04W 36/08

(54) **COMMUNICATION METHOD AND APPARATUS**

(30) Priority: 07.04.2023 CN 202310417340
(71) Applicant: Huawei Technologies Co., Ltd., Shenzhen, Guangdong 518129 (CN)
(72) Inventor: LU, Rui, Shenzhen, Guangdong 518129 (CN); HU, Xingxing, Shenzhen, Guangdong 518129 (CN)
(74) Representative: Gill Jennings & Every LLP
(86) International application number: PCT/CN2024/081968
(87) International publication number: WO 2024/207960

(57) **Abstract**

This application provides a communication method and apparatus, to alleviate signaling congestion in a handover process. The method includes: A first access network device sends, to one or more terminal devices, first information used to determine a terminal device set to which each of the one or more terminal devices belongs; after determining, based on the first information, the terminal device set to which each of the one or more terminal devices belongs, the one or more terminal devices send, to the first access network device, second information indicating a terminal device set to which the terminal device belongs; the first access network device sends a handover request message to a second access network device based on the second information, where the handover request message includes identification information and/or a quantity of terminal devices in a first terminal device set; and the first access network device receives a handover request acknowledgment message from the second access network device, and broadcasts handover indication information, where the handover indication information indicates the terminal device in the first terminal device set to perform handover.

## Description

### TECHNICAL FIELD

This application relates to the communication field, and more specifically, to a communication method and apparatus.

### BACKGROUND

Non-terrestrial network (non-terrestrial network, NTN) communication has advantages of wide coverage, long communication distance, high reliability, high flexibility, and high throughput, and is not affected by a geographical environment, a climate condition, and a natural disaster. Therefore, NTN communication has been widely applied to fields such as aviation communication, maritime communication, and military communication. Introducing a non-terrestrial network device like a satellite into a wireless communication system can improve experience of a terminal device. An NTN can provide a communication service for an area that is difficult to be covered by a terrestrial network, for example, an ocean, a forest, a desert, or a remote region, and the NTN can enhance reliability of wireless communication, for example, provide a more stable communication service for a terminal device in a high-speed movement scenario, for example, a train or an airplane. In addition, the NTN can further provide more data transmission resources, and support connections of more terminal devices.

In the NTN, mobility of the non-terrestrial network device is a main cause of handover of the terminal device. A satellite running in a non-geostationary orbit (non-geostationary orbit, NGSO) moves at a high speed relative to the ground, so that duration in which the satellite covers an area on the ground is very short. As a result, the terminal device frequently switches between serving cells, causing a signaling storm and signaling congestion.

### SUMMARY

This application provides a communication method and apparatus, to alleviate signaling congestion in a handover process.

According to a first aspect, a communication method is provided. The method may be performed by a terminal device or a chip or a chip system in the terminal device. The method includes: A terminal device receives first information from a first access network device; the terminal device sends second information to the first access network device, where the second information indicates a first terminal device set to which the terminal device belongs, and the first terminal device set is determined based on the first information; the terminal device receives handover indication information from the first access network device, where the handover indication information includes identification information of the first terminal device set; and the terminal device switches from the first access network device to a second access network device based on the handover indication information.

According to the foregoing technical solution, the first access network device may indicate a terminal device in a terminal device set (the first terminal device set) to perform handover, and handover times of terminal devices in different terminal device sets are different, so that the handover times of the terminal devices in the different terminal device sets can be controlled in an orderly manner, thereby alleviating signaling congestion in a handover process. In addition, the first access network device sends identification information of a terminal device and/or a quantity of terminal devices in the first terminal device set to the second access network device, and the second access network device may reserve, for the terminal device in the first terminal device set, a resource used for random access, so that handover efficiency of the terminal device can be increased.

With reference to the first aspect, in some implementations of the first aspect, the first information includes information about a plurality of terminal device sets, and the first terminal device set belongs to the plurality of terminal device sets. The information about the plurality of terminal device sets may be broadcast to one or more terminal devices based on the first information, or may be predefined.

With reference to the first aspect, in some implementations of the first aspect, the information about the terminal device set includes a time window corresponding to the terminal device set. Time windows corresponding to different terminal device sets in the plurality of terminal device sets are different. The terminal device may determine, based on the time windows respectively corresponding to the plurality of terminal device sets, a terminal device set to which the terminal device belongs.

With reference to the first aspect, in some implementations of the first aspect, the method further includes: When a first time belongs to a time window corresponding to the first terminal device set, determining that the terminal device belongs to the first terminal device set, where the first time is a time difference between a current moment and a moment at which the terminal device is disconnected from the first access network device.

With reference to the first aspect, in some implementations of the first aspect, the method further includes: When a first time does not belong to a time window corresponding to any one of the plurality of terminal device sets, and a time difference between the first time and a start time or an end time of a time window corresponding to the first terminal device set is less than or equal to a first threshold, determining that the terminal device belongs to the first terminal device set, the first time is a time difference between a current moment and a moment at which the terminal device is disconnected from the first access network device, and the first time is greater than the start time of the time window corresponding to the first terminal device set. According to this implementation, when the terminal device determines, based on the time windows respectively corresponding to the plurality of terminal device sets, that the terminal device does not belong to any terminal device set, a terminal device set whose time window is close to the first time of the terminal device may be selected as a terminal device set to which the terminal device belongs, to avoid a handover failure of the terminal device.

With reference to the first aspect, in some implementations of the first aspect, the information about the terminal device set includes information about a reference location of the terminal device set and a distance threshold corresponding to the reference location. Optionally, reference locations of different terminal device sets in the plurality of terminal device sets are different, and distance thresholds corresponding to the different terminal device sets are also different. Optionally, reference locations of different terminal device sets in the plurality of terminal device sets are the same, but distance thresholds corresponding to the different terminal device sets are different.

With reference to the first aspect, in some implementations of the first aspect, the method further includes: when a distance between a current location of the terminal device and a first reference location of the first terminal device set is less than or equal to a distance threshold corresponding to the first reference location, determining that the terminal device belongs to the first terminal device set.

With reference to the first aspect, in some implementations of the first aspect, the method further includes: when a distance between a current location of the terminal device and a reference location of any terminal device set in the plurality of terminal device sets is greater than a distance threshold corresponding to the reference location of the any terminal device set, and a distance between the current location and a first reference location of the first terminal device set is less than or equal to a second threshold, determining that the terminal device belongs to the first terminal device set. According to this implementation, when the terminal device determines, based on reference locations respectively corresponding to the plurality of terminal device sets and distance thresholds corresponding to the reference locations, that the terminal device does not belong to any terminal device set, a terminal device set whose reference location is close to the current location of the terminal device may be selected as a terminal device set to which the terminal device belongs, to avoid a handover failure of the terminal device.

With reference to the first aspect, in some implementations of the first aspect, the method further includes: when a distance between a current location of the terminal device and a first reference location of the first terminal device set is less than or equal to a distance threshold corresponding to the first reference location, a distance between the current location and a second reference location of a second terminal device set is less than or equal to a distance threshold corresponding to the second reference location, and a distance between the current location and the first reference location is less than a distance between the current location and the second reference location, determining that the terminal device belongs to the first terminal device set, where the second terminal device set belongs to the plurality of terminal device sets. According to this implementation, when the terminal device determines, based on reference locations respectively corresponding to the plurality of terminal device sets and distance thresholds corresponding to the reference locations, that the terminal device belongs to two or more terminal device sets, a terminal device set whose reference location is closer or closest to the current location of the terminal device may be selected, as a terminal device set to which the terminal device belongs, from the two or more terminal device sets.

With reference to the first aspect, in some implementations of the first aspect, the first information includes first indication information, the first indication information indicates a valid time corresponding to the first terminal device set, and the terminal device belongs to the first terminal device set within the valid time. A terminal device set to which the terminal device belongs and that is determined by the terminal device based on the first indication information does not change with movement of a non-terrestrial network device within a valid time corresponding to the terminal device set. The first access network device is deployed on the non-terrestrial network device, or the non-terrestrial network device is configured to forward information between the terminal device and the first access network device.

With reference to the first aspect, in some implementations of the first aspect, the first information includes second indication information, and the second indication information indicates that the terminal device belongs to the first terminal device set before receiving the handover indication information. A terminal device set to which the terminal device belongs and that is determined by the terminal device based on the second indication information does not change with movement of a non-terrestrial network device before handover indication information indicating the terminal device in the terminal device set to perform handover is received. The first access network device is deployed on the non-terrestrial network device, or the non-terrestrial network device is configured to forward information between the terminal device and the first access network device.

With reference to the first aspect, in some implementations of the first aspect, the information about the terminal device set includes identification information of the terminal device set.

With reference to the first aspect, in some implementations of the first aspect, the first access network device and the second access network device include a non-terrestrial network device; or the first access network device and the second access network device include a terrestrial network device associated with a non-terrestrial network device; or the first access network device includes a non-terrestrial network device, and the second access network device includes a terrestrial network device.

With reference to the first aspect, in some implementations of the first aspect, the method further includes: The terminal device receives, from the first access network device, common configuration information respectively corresponding to the plurality of terminal device sets, where common configuration information of different terminal devices in a same terminal device set is the same; the terminal device stores the common configuration information respectively corresponding to the plurality of terminal device sets; and that the terminal device switches from the first access network device to a second access network device based on the handover indication information includes: The terminal device switches from the first access network device to the second access network device based on the handover indication information and common configuration information corresponding to the first terminal device set. The common configuration information includes information related to a cell, and may be used when the terminal device switches to the cell. The common configuration information includes identification information of a target cell, information carried in a system message of the target cell, and the like. According to this implementation, as the non-terrestrial network device moves, even if the terminal device set to which the terminal device belongs changes, the terminal device stores cell-level configuration information of a terminal device set to which the terminal device belongs after the change. Therefore, handover of the terminal device is not affected.

According to a second aspect, a communication method is provided. The method may be performed by a first access network device or a chip or a chip system in the first access network device. The method includes: A first access network device sends first information to one or more terminal devices, where the first information is used to determine a terminal device set to which each of the one or more terminal devices belongs; the first access network device receives second information from the one or more terminal devices, where the second information indicates the terminal device set to which each of the one or more terminal devices belongs; the first access network device sends a handover request message to a second access network device, where the handover request message includes identification information of a terminal device in a first terminal device set and/or a quantity of terminal devices in the first terminal device set, and the first terminal device set is indicated by the second information; the first access network device receives a handover request acknowledgment message from the second access network device; and the first access network device sends handover indication information, where the handover indication information includes identification information of the first terminal device set.

The method provided in the second aspect is a method that is on the first access network device side and that corresponds to the first aspect. For beneficial effects of the method, directly refer to the first aspect.

With reference to the second aspect, in some implementations of the second aspect, the first information includes information about a plurality of terminal device sets, and the first terminal device set belongs to the plurality of terminal device sets.

With reference to the second aspect, in some implementations of the second aspect, the information about the terminal device set includes a time window corresponding to the terminal device set.

With reference to the second aspect, in some implementations of the second aspect, the information about the terminal device set includes information about a reference location of the terminal device set and a distance threshold corresponding to the reference location.

With reference to the second aspect, in some implementations of the second aspect, the first information includes first indication information, the first indication information indicates a valid time corresponding to the first terminal device set, and the terminal device in the first terminal device set belongs to the first terminal device set within the valid time.

With reference to the second aspect, in some implementations of the second aspect, the first information includes second indication information, and the second indication information indicates that the terminal device in the first terminal device set belongs to the first terminal device set before receiving the handover indication information.

With reference to the second aspect, in some implementations of the second aspect, the information about the terminal device set includes identification information of the terminal device set.

With reference to the second aspect, in some implementations of the second aspect, the first access network device and the second access network device include a non-terrestrial network device; or the first access network device and the second access network device include a terrestrial network device associated with a non-terrestrial network device; or the first access network device includes a non-terrestrial network device, and the second access network device includes a terrestrial network device.

According to a third aspect, a communication apparatus is provided. The apparatus may be used in the terminal device in the first aspect. The apparatus includes: a transceiver unit, configured to implement a receiving function and a sending function in the method according to the first aspect; and a processing unit, configured to implement a handover function and a function of determining a terminal device set to which the terminal device belongs in the method according to the first aspect.

According to a fourth aspect, a communication apparatus is provided. The apparatus may be used in the first access network device in the second aspect. The apparatus includes a transceiver unit, configured to implement a receiving function and a sending function in the method according to the second aspect.

According to a fifth aspect, a communication apparatus is provided, including a processor and a memory. The memory is configured to store a computer program, and the processor is configured to execute the computer program stored in the memory, so that the communication apparatus performs the method according to any one of the first aspect, the second aspect or the possible implementations of the first aspect and the second aspect.

According to a sixth aspect, a communication device is provided, including an input/output interface and a logic circuit. The input/output interface is configured to obtain input information and/or output information. The logic circuit is configured to perform the method according to any one of the first aspect, the second aspect or the possible implementations of the first aspect and the second aspect, to perform processing and/or generate the output information based on the input information.

According to a seventh aspect, a communication system is provided, including a terminal device and a first access network device. The terminal device is configured to implement the method according to any one of the first aspect or the possible implementations of the first aspect, and the first access network device is configured to implement the method according to any one of the second aspect or the possible implementations of the second aspect.

According to an eighth aspect, a computer-readable storage medium is provided. The computer-readable medium stores a computer program. When the computer program is run on a computer, the computer is enabled to perform the method according to any one of the first aspect, the second aspect, or the possible implementations of the first aspect and the second aspect.

According to a ninth aspect, a computer program product including instructions is provided. When the instructions are executed by a computer, a communication apparatus is enabled to implement the method according to any one of the first aspect, the second aspect, or the possible implementations of the first aspect and the second aspect.

The solutions provided in the third aspect to the ninth aspect are used to implement or cooperatively implement the method according to the first aspect or the second aspect, and therefore can achieve same or corresponding beneficial effects as the first aspect or the second aspect. Details are not described herein again.

### BRIEF DESCRIPTION OF DRAWINGS

FIG. 1(a) to FIG. 1(c) are diagrams of an architecture of a system to which embodiments of this application are applicable;
FIG. 2 is a schematic interaction flowchart of conventional cell handover;
FIG. 3 is a diagram of handover of a terminal device in an earth fixed cell (earth fixed cell);
FIG. 4 is a diagram of handover of a terminal device in an earth moving cell (earth moving cell);
FIG. 5 is a diagram of feeder link switchover in a transparent forwarding mode of a low earth orbit (low earth orbit, LEO) satellite;
FIG. 6 is a schematic interaction flowchart of a communication method according to an embodiment of this application;
FIG. 7 is a diagram of a change of a terminal device set to which a terminal device belongs in an earth moving cell;
FIG. 8 is a block diagram of a communication apparatus according to an embodiment of this application;
FIG. 9 is a block diagram of another communication apparatus according to an embodiment of this application; and
FIG. 10 is a block diagram of another communication apparatus according to an embodiment of this application.

### DESCRIPTION OF EMBODIMENTS

The following describes the technical solutions of this application with reference to the accompanying drawings.

The technical solutions of this application may be applied to an NTN and/or a terrestrial network (terrestrial network, TN). The technical solutions provided in this application may use various radio access technologies, for example, a 5th generation (5th generation, 5G) radio access technology like a long term evolution (long term evolution, LTE) access technology and a new radio (new radio, NR) technology, a 6th generation (6th generation, 6G) radio access technology, or a new radio access technology that emerges in the future.

A communication system to which this application is applicable includes one or more transmitters and one or more receivers. Signal transmission between the transmitter and the receiver may be performed by using a radio wave, or may be performed by using transmission media such as visible light, a laser, infrared light, and an optical fiber.

For example, the transmitter may be a terminal device, a base station, or another device that can obtain sensing information and/or artificial intelligence information, or chips or chip systems in these devices. The receiver may be a sensing center that performs fusion processing on the sensing information and/or the artificial intelligence information, or a chip or a chip system in the sensing center.

A terminal device in embodiments of this application may include various handheld devices, vehicle-mounted devices, wearable devices, or computing devices that have a wireless communication function, or other processing devices connected to a wireless modem. The terminal may be a mobile station (mobile station, MS), a subscriber unit (subscriber unit), user equipment (user equipment, UE), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), an uncrewed aerial vehicle, a machine type communication (machine type communication, MTC) terminal, a wireless terminal in self-driving (self-driving), or the like. The user equipment includes vehicle user equipment.

For example, a network device may be an evolved NodeB (evolved NodeB, eNB), a home NodeB (home evolved NodeB, or home NodeB, HNB), a baseband unit (baseband unit, BBU), a device that undertakes a base station function in device to device (device to device, D2D), or an access point (access point, AP), a wireless relay node, a wireless backhaul node, an uncrewed aerial vehicle, a transmission point (transmission point, TP), a transmission and reception point (transmission and reception point, TRP), or the like in a wireless fidelity (wireless fidelity, Wi-Fi) system, may be a gNB or a transmission point (for example, a TRP or a TP) in an NR system, or one or a group of (including a plurality of) antenna panels of a base station in an NR system, or may be a network node that forms a gNB or a transmission point, for example, a baseband unit (building baseband unit, BBU) or a distributed unit (distributed unit, DU). Alternatively, the network device may be a vehicle-mounted device, a wearable device, a network device in a 5G network, a network device in an evolved PLMN network, or the like. This is not limited. The network device provided in this application may be a non-terrestrial network device, or an apparatus having a base station function may be deployed on a non-terrestrial network device.

The network device has abundant product forms. For example, in a product implementation process, the BBU and a radio frequency unit (radio frequency unit, RFU) may be integrated into a same device, and the device is connected to an antenna array through a cable (for example but not limited to a feeder). The BBU and the RFU may alternatively be disposed separately, are connected to each other through an optical fiber, and communicate with each other by using, for example but not limited to, a common public radio interface (common public radio interface, CPRI) protocol. In this case, the RFU is usually referred to as a remote radio unit (remote radio unit, RRU), and is connected to the antenna array through a cable. In addition, the RRU may alternatively be integrated with the antenna array. For example, an active antenna unit (active antenna unit, AAU) product uses this structure. A part of physical layer functions can be separated from the BBU and integrated into the AAU.

For example, the network device may alternatively be a module or a unit that completes a part of functions of the base station. For example, the network device may alternatively include a central unit (central unit, CU) and/or a distributed unit (distributed unit, DU). It may be understood that the network device is divided into the CU and the DU from a perspective of a logical function. The CU and the DU may be physically separated, or may be deployed together. This is not specifically limited in embodiments of this application. One CU may be connected to one DU, or a plurality of DUs may share one CU. CU-DU division may be performed by protocol stacks. In a possible manner, a radio resource control (radio resource control, RRC) layer, a service data adaptation protocol stack (service data adaptation protocol, SDAP) layer, and a packet data convergence protocol (packet data convergence protocol, PDCP) layer are deployed on the CU, and the remaining radio link control (radio link control, RLC) layer, media access control (media access control, MAC) layer, and physical layer are deployed on the DU. The foregoing protocol stack division manner is not completely limited in this application, and there may be another division manner, for example, division based on real-time performance of a service.

For example, the CU may use a setting manner in which a user plane (user plane, UP) and a control plane (control plane, CP) are separated. Correspondingly, the network device in embodiments of this application may alternatively be a central unit-control plane (CU-CP) node and/or a central unit-user plane (CU-UP) node. The CU-CP is responsible for a control plane function, and mainly includes RRC and a PDCP-C. The PDCP-C is mainly responsible for data encryption/decryption, integrity protection, data transmission, and the like of the control plane. The CU-UP is responsible for a user plane function, and mainly includes an SDAP and a PDCP-U. The SDAP is mainly responsible for processing data of a core network and mapping a flow (flow) to a bearer. The PDCP-U is mainly responsible for encryption and decryption, integrity protection, header compression, serial number maintenance, data transmission, and the like of a data plane.

In different systems, the CU (including the CU-CP and the CU-UP) or the DU may also have different names, but a person skilled in the art may understand meanings thereof. For example, in an open radio access network (open radio access network, O-RAN) system, a CU may also be referred to as an O-CU (open CU), a DU may also be referred to as an O-DU, a CU-CP may also be referred to as an O-CU-CP, and a CU-UP may also be referred to as an O-CU-UP.

This application further provides a core network device. The core network device may include one or more core network elements. A 5G core network is used as an example. The 5G core network includes an access and mobility management function (access and mobility management function, AMF) network element responsible for services such as mobility management and access management, a session management function (session management function, SMF) network element responsible for session management, a user plane function (user plane function, UPF) network element responsible for data packet routing and forwarding and quality of service (quality of service, QoS) control of a user plane, a policy control function (policy control function, PCF) network element, and the like. The core network elements may work independently, or may be combined together to implement some control functions. For example, the AMF, the SMF, and the PCF may be combined together to serve as a core network device.

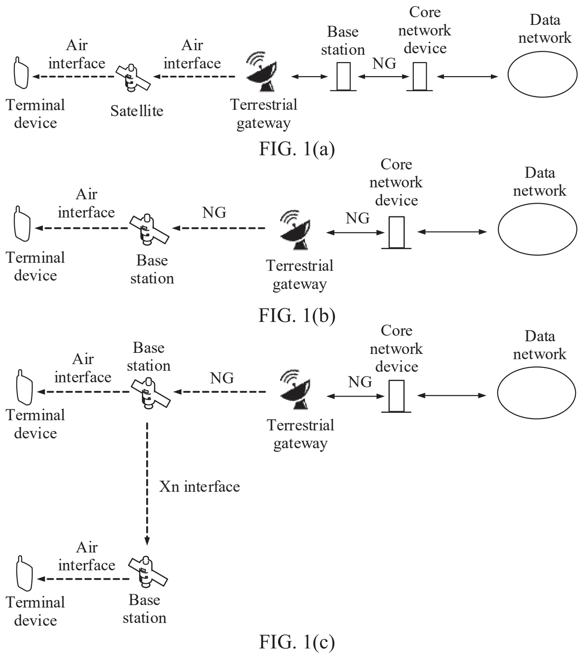

FIG. 1(a) to FIG. 1(c) are diagrams of an architecture of a system to which embodiments of this application are applicable. The system includes a terminal device, a base station, a satellite, a terrestrial gateway, a core network device, and the like. The base station may be deployed on the satellite, or the satellite has a base station function. As shown in FIG. 1(b), the satellite is connected to the terrestrial gateway through a radio link, and the terrestrial gateway is connected to the core network device in a wired or wireless manner. Alternatively, the base station may be deployed on the ground. As shown in FIG. 1(a), the satellite is connected to the terrestrial gateway through a radio link, and the terrestrial gateway is connected to the base station or the core network device deployed on the ground in a wired or wireless manner. When the base station is deployed on the ground, the base station communicates with the terminal device via the satellite, and the satellite forwards a signal. In addition, a radio link may exist between satellites. As shown in FIG. 1(c), the satellite has a function of implementing transparent transmission and forwarding. Network elements in FIG. 1(a) to FIG. 1(c) and interfaces between different network elements are described as follows.

The terminal device includes a mobile device that supports new radio, for example, a typical mobile device like a mobile phone or a pad, and may access a satellite network through an air interface and initiate a service such as call or internet access.

The base station mainly provides a wireless access service, schedules a wireless resource for the accessed terminal device, and provides a reliable wireless transmission protocol, a data encryption protocol, and the like for the terminal device.

The terrestrial gateway is responsible for forwarding signaling and service data between the satellite and the base station or between the satellite and the core network device.

An air interface is a radio link between the terminal device and the base station, or a radio link between the satellite and the terrestrial gateway.

An Xn interface (NR is used as an example) is an interface between base stations, and is mainly used for exchange of signaling such as handover signaling.

An NG interface (NR is used as an example) is an interface between the base station deployed on the satellite and the terrestrial gateway, or an interface between the terrestrial gateway and the core network device, and is mainly used for exchange of signaling of a non-access stratum (non-access stratum, NAS) and the like of the core network device and service data of the terminal device.

It should be noted that the foregoing communication system is described by using an example in which an NR radio access technology is used. A type of the used radio access technology is not limited in this application. For example, if an LTE radio access technology is used, in FIG. 1(a) to FIG. 1(c), the Xn interface is an X2 interface, and the NG interface is an S1 interface.

To facilitate understanding of embodiments of this application, the following briefly describes technologies related to embodiments of this application.

### 1. NTN communication

In an NTN, a non-terrestrial network device may be used for communication. The non-terrestrial network device includes a satellite, a high altitude platform station (high altitude platform station, HAPS) device, an uncrewed aerial vehicle device, and the like. In this application, an example in which a satellite is used as a non-terrestrial network device is used for description. Usually, a higher orbit of a satellite indicates a larger coverage area but a longer communication delay of the satellite. Based on the orbital altitude, satellites can be classified into the following types:
(1) an LEO satellite with an orbital altitude of 160 km to 2,000 km;
(2) a middle earth orbit (middle earth orbit, MEO) satellite with an orbital altitude of 2,000 km to 35,786 km; and
(3) a geostationary earth orbit (geostationary earth orbit, GEO) satellite with an orbital altitude greater than 35,786 km.

A GEO is a geostationary earth orbit, and a satellite running in the orbit is stationary relative to the ground. An LEO and an MEO are collectively referred to as an NGSO, and a satellite running in this type of orbit moves at a high speed relative to the ground.

Cells served by an NGSO satellite may be further classified into an earth moving cell and an earth fixed cell based on whether a beam of the satellite moves with the satellite. For the earth moving cell, the cell moves relative to the ground, and a beam direction of the satellite moves with the satellite. For the earth fixed cell, the cell is fixed relative to the ground within a specific time, and a satellite antenna can use its beamforming capability to fixedly point the beam to an area on the ground within the specific time.

Satellites may be generally classified into two types based on working modes. A first mode is a transparent (transparent) forwarding mode. The satellite forwards information about a cell of a terrestrial network device (for example, a base station), as shown in FIG. 1(a). A function of the satellite is radio frequency filtering, frequency conversion, and frequency amplification. The satellite mainly serves as a layer 1 relay (layer 1 relay, L1 relay) to regenerate a physical layer signal, and does not have another higher protocol layer.

A second mode is a regenerative (regenerative) mode. The satellite has a processing function of a base station. In the regenerative working mode, satellites may be classified into the following satellites: regenerative satellites without an inter-satellite link, where, as shown in FIG. 1(b), there is no inter-satellite link (inter-satellite link, ISL) between satellites; regenerative satellites with an inter-satellite link, where there is an interface between the satellites, for direct data exchange, and as shown in FIG. 1(c), the inter-satellite link is an Xn interface; and a regenerative satellite having a DU processing function of a base station, where the satellite serves as a DU in this scenario.

### 2. Handover

### 1. Handover in a TN

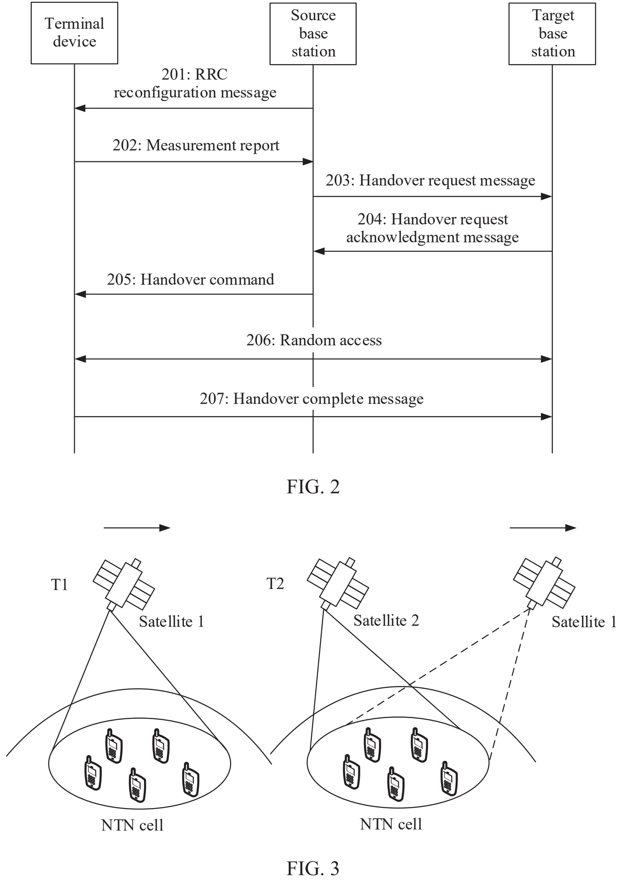

Due to movement of a terminal device, signal quality of a cell currently accessed by the terminal device may deteriorate, and the terminal device needs to switch to a cell with better signal quality to obtain a service. For a conventional handover procedure, handover of the terminal device is controlled by a network device. The network device sends a handover command to indicate a cell to which the terminal device is to be handed over and how to perform handover. After receiving the handover command, the terminal device accesses a target cell based on content included in the handover command. Therefore, a network side needs to obtain an identifier of the target cell. FIG. 2 is a schematic interaction flowchart of conventional cell handover. Specific steps are as follows:
201: A source base station sends a radio resource control (radio resource control, RRC) reconfiguration (RRC Reconfiguration) message to a terminal device in a connected state, where the RRC reconfiguration message is used to configure the terminal device to measure signal strength of a current serving cell and signal strength of another cell, and the RRC reconfiguration message includes parameters such as a measurement object, a report configuration, and a measurement identifier.
202: The terminal device receives the RRC reconfiguration message from the source base station; and after performing cell measurement based on the RRC reconfiguration message, the terminal device generates a measurement report and reports the measurement report to the currently connected source base station, where the measurement report includes the signal strength of the current serving cell and the signal strength of the another cell that are obtained by the terminal device through measurement.
203: The source base station determines, based on the measurement report reported by the terminal device, whether the terminal device needs to perform cell handover; and if the source base station determines that the terminal device needs to perform cell handover, the source base station sends a handover request message to a target base station.
204: The target base station receives the handover request message from the source base station, and determines, based on a quantity of terminal devices connected to the target base station and other cases, whether to allow access of the terminal device; and if the target base station allows the access of the terminal device, the target base station sends a handover request acknowledgment message to the source base station, where the handover request acknowledgment message includes parameters such as a cell radio network temporary identifier (cell radio network temporary identifier, C-RNTI) allocated to the terminal device, and a security-related algorithm of the target base station.
205: The source base station receives the handover request acknowledgment message from the target base station, and sends a handover command to the terminal device, where the handover command includes the parameters in the handover request acknowledgment message. It is equivalent that the source base station performs transparent transmission. Specifically, the handover command includes related information of a target cell and a related configuration parameter required for accessing the target cell by the terminal device. For example, the handover command includes information like a PCI of the target cell, frequency information of the target cell (a frequency of the target cell), a C-RNTI allocated by the target cell to the terminal device, and a random access channel (random access channel, RACH) resource required for accessing the target cell.
206: The terminal device receives the handover command from the source base station, and initiates random access to the target base station based on the handover command. In an existing handover procedure, the terminal device is disconnected from the source base station, and data receiving and sending of the terminal device is temporarily interrupted before the terminal device successfully accesses the target base station.
207: If the terminal device successfully accesses the target base station, the terminal device sends a handover complete message to the target base station.

### 2. Handover in an NTN

In a TN, due to movement of a terminal device, signal quality of a current serving cell deteriorates, and the terminal device needs to switch to a neighboring cell with better signal quality. Different from that in the terrestrial network, a satellite has a large cell coverage area, and a coverage radius is tens to hundreds of kilometers. After moving, the terminal device is generally still within cell coverage of the satellite. In addition, a satellite running in an NGSO moves at a high speed relative to the ground, so that duration in which the satellite covers an area on the ground is very short. As a result, the terminal device frequently switches between serving cells. Therefore, in the NTN, mobility of the satellite is a main cause of handover of the terminal device.

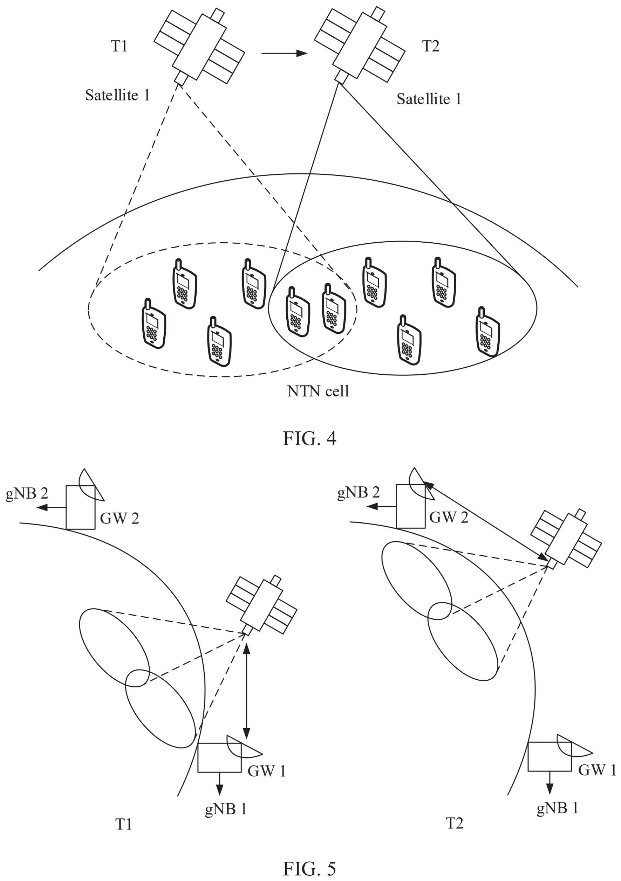

FIG. 3 is a diagram of handover of a terminal device in an earth fixed cell, and FIG. 4 is a diagram of handover of a terminal device in an earth moving cell. For the earth fixed cell, a satellite may cover an area on the ground for a period of time. When the satellite is to move out of coverage of a cell accessed by the terminal device, all terminal devices in the cell need to switch to a next satellite. For the earth moving cell, the cell moves with a satellite. In a process in which the satellite scans the ground, a terminal device continuously switches to/from the cell. High-speed movement of an NGSO satellite causes frequent handover of a terminal device. For the earth moving cell, frequent handover of a large quantity of terminal devices causes large signaling overheads. For the earth fixed cell, simultaneous handover of a large quantity of terminal devices causes a signaling storm, and congestion is caused when the large quantity of terminal devices simultaneously access a target access network device. Therefore, reducing the signaling overheads caused by the frequent handover of the terminal device is a key to increasing communication efficiency of an NTN system.

The handover shown in FIG. 3 and FIG. 4 is switchover of a service link (service link) between the terminal device and the satellite. In a transparent forwarding mode of the satellite, as an altitude of the satellite relative to the ground changes, a feeder link (feeder link) between the satellite and a terrestrial gateway (gateway, GW) also switches over. When the feeder link switches over, the satellite changes the terrestrial gateway. A link between the satellite and the terrestrial gateway is referred to as a feeder link, and a link between the terminal device and the satellite is referred to as a service link.

FIG. 5 is a diagram of feeder link switchover (feeder link switch over) in a transparent forwarding mode of an LEO satellite. Different terrestrial gateways are connected to different base stations. At a moment T1, the satellite is connected to a GW 1, and a base station connected to the GW 1 is a gNB 1. As the satellite moves, the satellite gradually moves away from the GW 1, and quality of a link between the satellite and the GW 1 deteriorates. The satellite continues to move until the GW 1 is not within coverage of the satellite. At a moment T2, the satellite is disconnected from the GW 1, the satellite is connected to a GW 2, and a feeder link switches over to a link between the satellite and the GW 2. A base station connected to the GW 2 is a gNB 2, and all terminal devices served by the satellite also switch from the gNB 1 to the gNB 2.

The feeder link switchover causes all the terminal devices served by the satellite to switch to a new cell simultaneously. This is similar to handover of the terminal device in the earth fixed cell, and causes severe signaling congestion.

In embodiments of this application, signaling overheads of handover can be reduced through group handover, and congestion can be alleviated through sequential handover of the terminal devices based on a group, thereby increasing handover efficiency. The group handover means that the terminal devices are grouped according to a specific attribute, terminal devices in a same group share a common part in handover configuration information, and the common part may be delivered to the terminal devices through a broadcast message, to reduce signaling overheads. After receiving respective handover configuration information, the terminal device prepares for handover. In this case, a network side may broadcast only a group identifier, and a terminal device belonging to the group autonomously performs handover. According to the method, signaling overheads generated when the handover configuration information and a handover command are delivered can be reduced. In addition, handover times of different terminal devices can be controlled in an orderly manner, so that a congestion problem can be effectively alleviated. In embodiments of this application, all terminal devices in a same group may be referred to as a terminal device set.

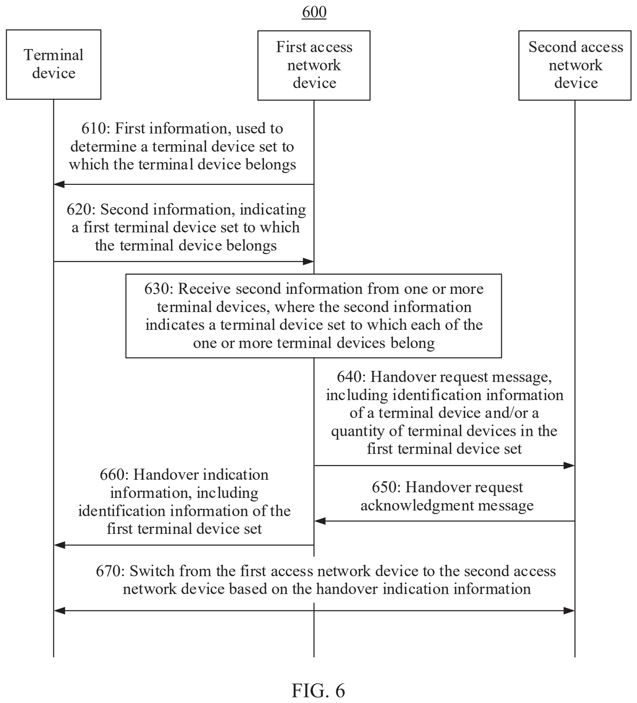

FIG. 6 is a schematic interaction flowchart of a communication method 600 according to an embodiment of this application. In this embodiment of this application, a first access network device and a second access network device are non-terrestrial network devices, for example, base stations deployed on a satellite. Alternatively, a first access network device and a second access network device are terrestrial network devices associated with a non-terrestrial network device, for example, base stations deployed on the ground, and a satellite may forward information of the base stations. Alternatively, in this embodiment of this application, a first access network device is a non-terrestrial network device, and a second access network device is a terrestrial network device. This is not specifically limited in this application.

610: The first access network device sends first information to one or more terminal devices, where the first information is used to determine a terminal device set to which each of the one or more terminal devices belongs. Correspondingly, the terminal device receives the first information from the first access network device. That the first access network device sends the first information to the one or more terminal devices may be understood as that the first access network device broadcasts the first information. The first information may be included in a system information block (system information block, SIB) and broadcast to the terminal device.

For example, the first access network device is an access network device currently accessed by the terminal device, for example, a serving base station. If the terminal device is to perform handover, the first access network device is a source access network device of the terminal device, for example, a source base station.

In an implementation, the first information includes information about a plurality of terminal device sets. The information about the terminal device set is used to determine a terminal device set to which the terminal device belongs. Optionally, the information about the plurality of terminal device sets is predefined, for example, predefined in a protocol. The first information indicates the one or more terminal devices to separately determine, based on the information about the terminal device set, the terminal device set to which the one or more terminal devices belong. The terminal device set may also be referred to as a terminal device group.

The information about the terminal device set includes a time window corresponding to the terminal device set, or the information about the terminal device set includes information about a reference location and a distance threshold corresponding to the reference location.

620: The one or more terminal devices that receive the first information separately send second information to the first access network device, where the second information indicates the terminal device set to which the terminal device belongs, and the terminal device set to which the terminal device belongs is determined based on the first information.

For example, a terminal device #1 sends second information to the first access network device, where the second information indicates a first terminal device set to which the terminal device #1 belongs, and the first terminal device set is determined by the terminal device based on the first information.

In an implementation, the information about the terminal device set includes the time window corresponding to the terminal device set. Time windows corresponding to different terminal device sets in the plurality of terminal device sets are different. The terminal device determines, based on time windows respectively corresponding to the plurality of terminal device sets, that the terminal device belongs to the first terminal device set.

For example, the time window defines a time range. The time window may be determined based on a start time and an end time, for example, [t1, t2], where t1 is a start time, and t2 is an end time. The time window may alternatively be determined based on an end time. For example, if an end time corresponding to a time window 1 is t1, and an end time corresponding to a time window 2 is t2, a time range corresponding to the time window 1 is [t0, t1), t0 is an end time of a previous time window, and a time range corresponding to the time window 2 is [t1, t2). An end time of a previous time window is a start time of a next time window, and a start time of a first time window is 0. If there is only one time window, a start time of the time window is also 0. "[" represents that an endpoint is included, and ")" represents that no endpoint is included. It should be noted that merely an example of a representation form of the time window is provided herein, and the representation form of the time window is not limited in this application.

Optionally, the information about the terminal device set includes identification information of the terminal device set and the time window corresponding to the terminal device set, and identification information of different terminal device sets in the plurality of terminal device sets is different. The second information may indicate identification information of the first terminal device set.

Optionally, the information about the terminal device set includes identification information of the terminal device set, the time window corresponding to the terminal device set, and a maximum quantity of terminal devices corresponding to the terminal device set.

Optionally, when a first time belongs to a time window corresponding to the first terminal device set, it is determined that the terminal device belongs to the first terminal device set, where the first time is a time difference between a current moment and a moment at which the terminal device is disconnected from the first access network device.

The first time in this embodiment of this application may also be understood as a remaining time in which the first access network device can serve the terminal device, or a remaining service time of the terminal device in a current serving cell. The first time may be determined by the terminal device, or may be broadcast by the first access network device to the terminal device. For example, when a cell accessed by the terminal device is an earth fixed cell, the first time may be a remaining service time (t-service) broadcast by the first access network device to the terminal device, for example, broadcast in a system information block 19 (system information block19, SIB19). When a cell accessed by the terminal device is an earth moving cell, the first time may be determined by the terminal device.

Optionally, when a first time does not belong to a time window corresponding to any one of the plurality of terminal device sets, and a time difference between the first time and a start time or an end time of a time window corresponding to the first terminal device set is less than or equal to a first threshold, it is determined that the terminal device belongs to the first terminal device set, the first time is a time difference between a current moment and a moment at which the terminal device is disconnected from the first access network device. The first time is greater than the start time of the time window corresponding to the first terminal device set. The first threshold may be determined by the first access network device and broadcast to the terminal device, or the first threshold may be predefined, or the first threshold may be determined by the terminal device. This is not limited in embodiments of this application. The first threshold is a value greater than or equal to 0.

In this optional solution, when the terminal device determines, based on the time windows respectively corresponding to the plurality of terminal device sets, that the terminal device does not belong to any terminal device set, a terminal device set whose time window is close to the first time of the terminal device may be selected as a terminal device set to which the terminal device belongs, to avoid a handover failure of the terminal device.

Optionally, when a first time does not belong to a time window corresponding to any one of the plurality of terminal device sets, the terminal device performs handover according to an existing handover procedure, that is, performs handover according to steps 201 to 207. In this implementation, the terminal device reports, to the first network device, that the terminal device does not belong to any group. For example, the second information may include indication information, and the indication information indicates that the terminal device does not belong to any group.

For example, when the first time does not belong to the time window corresponding to any one of the plurality of terminal device sets, and the time difference between the first time and the start time or the end time of the time window corresponding to the first terminal device set is the smallest, it is determined that the terminal device belongs to the first terminal device set, the first time is the time difference between the current moment and the moment at which the terminal device is disconnected from the first access network device, and the first time is greater than the start time of the time window corresponding to the first terminal device set. For example, the first information includes information about three terminal device sets, a time window corresponding to a terminal device set 1 is [0, t1), a time window corresponding to a terminal device set 2 is [t1, t2), and a time window corresponding to a terminal device set 3 is [t2, t3). When the first time does not belong to the time window corresponding to any one of the three terminal device sets, and the first time is closest to the time window [t2, t3) corresponding to the terminal device set 3, it is determined that the terminal device belongs to the terminal device set 3, where the first time is greater than t2.

For example, when the first time does not belong to the time window corresponding to any one of the plurality of terminal device sets, and a time difference between the first time and a start time or an end time of a time window corresponding to each of two or more terminal device sets is less than or equal to the first threshold, it is determined, based on quantities of terminal devices respectively corresponding to the two or more terminal device sets, that the terminal device belongs to a first terminal device set in the two or more terminal device sets, where the first time is the time difference between the current moment and the moment at which the terminal device is disconnected from the first access network device, and the first time is greater than the start time of the time window corresponding to the first terminal device set. For example, a terminal device set with a smallest quantity of terminal devices may be selected as the first terminal device set.

Optionally, when a first time belongs to the time window corresponding to the first terminal device set in the plurality of terminal device sets, the first time also belongs to a time window corresponding to a second terminal device set in the plurality of terminal device sets, and the start time of the time window corresponding to the first terminal device set is earlier than or later than a start time of the time window corresponding to the second terminal device set, it is determined that the terminal device belongs to the first terminal device set, and the first time is the time difference between the current moment and the moment at which the terminal device is disconnected from the first access network device. In this example, when the terminal device determines, based on the time windows respectively corresponding to the plurality of terminal device sets, that the terminal device meets a condition of the two or more terminal device sets, a terminal device set with an earliest or latest start time of a time window may be selected as a terminal device set to which the terminal device belongs, to avoid a handover failure of the terminal device.

Optionally, when the terminal device determines, based on the time windows respectively corresponding to the plurality of terminal device sets, that the terminal device meets a condition of two or more terminal device sets, the terminal device belongs to a terminal device set that is indicated by the first access network device to first perform handover.

In another implementation, the information about the terminal device set includes information about a reference location of the terminal device set and a distance threshold corresponding to the reference location. In this implementation, the terminal device determines area information based on the reference location and the distance threshold. In an example, reference locations of different terminal device sets in the plurality of terminal device sets are different, and distance thresholds corresponding to the different terminal device sets are also different. In another example, reference locations of different terminal device sets in the plurality of terminal device sets are the same, but distance thresholds corresponding to the different terminal device sets are different. In another example, reference locations of different terminal device sets in the plurality of terminal device sets are different, but distance thresholds corresponding to the different terminal device sets are the same. The terminal device determines, based on information about reference locations respectively corresponding to the plurality of terminal device sets and distance thresholds corresponding to the reference locations, that the terminal device belongs to the first terminal device set. The distance threshold corresponding to the reference location of the terminal device set may be understood as a maximum distance threshold between a location of a terminal device belonging to the terminal device set and the reference location. The information about the reference location may be longitude and latitude information.

For example, an area corresponding to the terminal device set may be determined based on the reference location of the terminal device set and the distance threshold corresponding to the reference location. The terminal device determines that a location of the terminal device belongs to the area of the terminal device set, and determines that the terminal device belongs to the first terminal device set.

Optionally, the information about the terminal device set includes identification information of the terminal device set, the information about the reference location of the terminal device set, and the distance threshold corresponding to the reference location. Identification information of different terminal device sets in the plurality of terminal device sets is different. The second information may indicate identification information of the first terminal device set.

Optionally, the information about the terminal device set includes identification information of the terminal device set, the information about the reference location of the terminal device set, the distance threshold corresponding to the reference location, and a maximum quantity of terminal devices corresponding to the terminal device set.

Optionally, the reference location of the terminal device set is an absolute location determined by the first radio access network device, and the absolute location does not change with time in one grouping period. In a next grouping period, the first access network device re-determines a reference location.

For example, the information about the reference location of the terminal device set is information about a relative location that is relative to the reference location and that is determined by the first radio access network device. The reference location changes as a satellite moves. For example, as the satellite moves, the terminal device determines a reference location based on ephemeris information of the satellite. The relative location information does not change with time. The terminal device may update the information about the reference location of the terminal device set. Therefore, the first access network device does not need to send updated information about the terminal device set/an updated reference location of the terminal device set to the terminal device, thereby reducing signaling overheads. For example, the information about the reference location of the terminal device set includes ground coordinates P(t) within coverage of the satellite and coordinates D(p) relative to the ground coordinates P(t), where P(t) changes with movement of the satellite, and D(p) does not change with time or satellite movement.

Optionally, the information about the terminal device set may be information about an area boundary. An area corresponding to a terminal device set may be determined based on the information about the area boundary, and a terminal device in the area belongs to the terminal device set.

For example, the information about the area boundary includes information about a boundary line, and the terminal device may determine, based on the information about the boundary line, an area corresponding to a terminal device set. For example, the first information carries information about a boundary line, and an area that belongs to a side of the boundary line is an area corresponding to a terminal device set. The information about the boundary line may be represented by longitude and latitude information or coordinate information.

For example, the information about the area boundary includes information about a polygon, and the terminal device may determine, based on the information about the polygon, an area corresponding to a terminal device set. The first information carries information about an area boundary of the terminal device set. For example, the first information carries vertex information of a polygonal area, and the terminal device may determine the polygonal area based on the vertex information. The information about the polygon/the vertex information may be represented by longitude and latitude information or coordinate information. Optionally, when a distance between a current location of the terminal device and a first reference location of the first terminal device set is less than or equal to a distance threshold corresponding to the first reference location, it is determined that the terminal device belongs to the first terminal device set.

Optionally, when a distance between a current location of the terminal device and a reference location of any terminal device set in the plurality of terminal device sets is greater than a distance threshold corresponding to the reference location of the any terminal device set, and a distance between the current location of the terminal device and a first reference location of the first terminal device set is less than or equal to a second threshold, it is determined that the terminal device belongs to the first terminal device set. The second threshold may be determined by the first access network device and broadcast to the terminal device, or the second threshold may be predefined, or the second threshold may be determined by the terminal device. This is not limited in embodiments of this application. The second threshold is a value greater than or equal to 0. In this optional solution, when the terminal device determines, based on reference locations respectively corresponding to the plurality of terminal device sets and distance thresholds corresponding to the reference locations, that the terminal device does not belong to any terminal device set, a terminal device set whose reference location is close to the current location of the terminal device may be selected as a terminal device set to which the terminal device belongs, to avoid a handover failure of the terminal device.

Optionally, when the terminal device determines, based on the information about the plurality of terminal device sets, that the terminal device does not belong to any terminal device set, the terminal device performs handover according to an existing handover procedure, that is, performs handover according to steps 201 to 207. In this implementation, the terminal device reports, to the first network device, that the terminal device does not belong to any group. For example, the second information may include indication information, and the indication information indicates that the terminal device does not belong to any group. For example, when the distance between the current location of the terminal device and the reference location of the any terminal device set in the plurality of terminal device sets is greater than the distance threshold corresponding to the reference location of the any terminal device set, and the distance between the current location and the first reference location of the first terminal device set is the smallest, it is determined that the terminal device belongs to the first terminal device set.

For example, when the distance between the current location of the terminal device and the reference location of the any terminal device set in the plurality of terminal device sets is greater than the distance threshold corresponding to the reference location of the any terminal device set, and a distance between the current location and each of reference locations respectively corresponding to two or more terminal device sets is less than or equal to the second threshold, it is determined, based on quantities of terminal devices respectively corresponding to the two or more terminal device sets, that the terminal device belongs to a first terminal device set in the two or more terminal device sets.

Optionally, when a distance between a current location of the terminal device and a first reference location of the first terminal device set is less than or equal to a distance threshold corresponding to the first reference location, a distance between the current location and a second reference location of a second terminal device set is less than or equal to a distance threshold corresponding to the second reference location, and a distance between the current location of the terminal device and the first reference location is less than a distance between the current location and the second reference location, it is determined that the terminal device belongs to the first terminal device set, where the second terminal device set belongs to the plurality of terminal device sets. In this optional solution, when the terminal device determines, based on reference locations respectively corresponding to the plurality of terminal device sets and distance thresholds corresponding to the reference locations, that the terminal device meets a condition of two or more terminal device sets, a terminal device set whose reference location is closer or closest to the current location of the terminal device may be selected, as a terminal device set to which the terminal device belongs, from the two or more terminal device sets, to avoid a handover failure of the terminal device.

Optionally, when the terminal device determines, based on reference locations respectively corresponding to the plurality of terminal device sets and distance thresholds corresponding to the reference locations, that a condition of two or more terminal device sets is met, the terminal device belongs to a terminal device set that is indicated by the first access network device to first perform handover.

630: The first access network device receives the second information from the one or more terminal devices, where the second information indicates the terminal device set to which each of the one or more terminal devices belongs.

For example, the first access network device receives the second information from the terminal device #1, where the second information indicates the first terminal device set to which the terminal device belongs, and the second information may include the identification information of the first terminal device set.

Specifically, the first access network device may determine, based on the second information sent by the one or more terminal devices, identification information of a terminal device and/or a quantity of terminal devices in a terminal device set to which each terminal device belongs.

In an implementation of this application, if the handover procedure is performed, the method further includes: The first access network device sends a handover request message to the second access network device, where the handover request message includes identification information of a terminal device set corresponding to a terminal device that needs to perform handover, and the terminal device set may not be determined according to step 610 to step 630. In this embodiment of this application, step 640 to step 670 may be independent implementations, and are not bound to step 610 to step 630.

640: The first access network device sends the handover request message to the second access network device, where the handover request message includes at least one of the following: identification information of a terminal device set, identification information of a terminal device in the terminal device set, and a quantity of terminal devices in the terminal device set. For example, the handover request message includes identification information of a terminal device in the first terminal device set and/or a quantity of terminal devices in the first terminal device set, and the first terminal device set is indicated by the second information. Correspondingly, the second access network device receives the handover request message from the first access network device, where the second access network device is a target access network device.

650: The second access network device sends a handover request acknowledgment message to the first access network device. Correspondingly, the first access network device receives the handover request acknowledgment message from the second access network device.

For example, the handover request message includes the quantity of terminal devices in the first terminal device set. The handover request acknowledgment message indicates that access of the terminal device in the first terminal device set is allowed. After obtaining the quantity of terminal devices in the terminal device set, the second access network device may determine whether to allow access of all or a part of the terminal devices in the terminal device set.

For example, the handover request message includes the identification information of the terminal device in the first terminal device set, the handover request acknowledgment message includes configuration information used by the terminal device in the first terminal device set to perform handover, and the configuration information is used by the terminal device in the first terminal device set to access the second access network device. For example, the configuration information includes terminal device-level configuration information of different terminal devices in the first terminal device set, and the terminal device-level configuration information may also be referred to as terminal device-specific configuration information, may include information separately configured for different terminal devices, such as a C-RNTI allocated by a cell corresponding to the second access network device to the terminal device.

For example, after the second access network device receives the handover request message of the first access network device, the second access network device determines the configuration information of the different terminal devices in the first terminal device set based on the identification information of the terminal device in the first terminal device set. The handover request acknowledgment message sent by the second access network device to the first access network device includes the configuration information of the different terminal devices in the first terminal device set.

For example, the handover request message sent by the first access network device to the second access network device includes identification information of terminal devices included in the plurality of terminal device sets and/or a quantity of terminal devices included in each of the plurality of terminal device sets. The handover request acknowledgment message sent by the second access network device to the first access network device includes terminal device-level configuration information respectively corresponding to the plurality of terminal device sets. When the first access network device determines that the terminal device in the first terminal device set needs to perform handover, the first access network device broadcasts handover indication information indicating the terminal device in the first terminal device set to perform handover; or when the first access network device determines that a terminal device in the second terminal device set needs to perform handover, the first access network device broadcasts handover indication information indicating the terminal device in the second terminal device set to perform handover. Based on this example, the first access network device may report, to the second access network device, the identification information of the terminal devices included in the plurality of terminal device sets and/or the quantity of terminal devices included in each of the plurality of terminal device sets, and the second access network device may reserve, for the terminal devices in the plurality of terminal device sets, a resource used for random access, so that handover efficiency of the terminal device in the terminal device set can be increased.

For example, the configuration information sent by the second access network device to the first access network device based on the handover request acknowledgment message includes at least one of the following: a physical cell identifier of a target cell corresponding to the second access network device, frequency information of the target cell corresponding to the second access network device, a C-RNTI allocated by the target cell corresponding to the second access network device to the terminal device in the first terminal device set, or information like a RACH resource required for accessing the target cell corresponding to the second access network device. It may be understood that the second access network device may send terminal device-level configuration information and cell-level configuration information to the first access network device based on the handover request acknowledgment message, and the cell-level configuration information may be referred to as common configuration information (common configuration). The cell-level configuration information includes information related to a cell, and may be used when the terminal device switches to the cell. The cell-level configuration information includes identification information of a target cell, information carried in a system message of the target cell, and the like. Cell-level configuration information of different terminal devices in a same terminal device set is the same.

Optionally, in an implementation of this application, the method further includes the following steps 660 and 670.

660: The first access network device sends handover indication information, where the handover indication information includes the identification information of the first terminal device set, and the handover indication information indicates the terminal device in the first terminal device set to perform handover. Correspondingly, the terminal device in the first terminal device set receives the handover indication information from the first access network device.

In an implementation, the handover indication information further includes configuration information used by the terminal device in the first terminal device set to perform handover, and the configuration information includes terminal device-level configuration information and common configuration information. In this implementation, the common configuration information is not sent to the terminal device in advance. The configuration information used for terminal device handover is sent to the terminal device by using RRC signaling, for example, may be sent to the terminal device by using an RRC configuration (RRCReconfiguration) message. In this implementation, the terminal devices are grouped and perform handover by group, to control the terminal devices to sequentially switch to the second access network device, thereby preventing congestion.

In another implementation, the handover indication information further includes terminal device-level configuration information used by the terminal device in the first terminal device set to perform handover. In this implementation, common configuration information is sent to the terminal device in advance. The terminal device-level configuration information used for terminal device handover is sent by the first access network device to the terminal device by using RRC signaling, for example, may be sent to the terminal device by using an RRCReconfiguration message. After receiving the handover indication information, the terminal device performs handover.

In another implementation, the handover indication information includes only the identification information of the first terminal device set. The first access network device may broadcast the identification information of the first terminal device set, to indicate terminal device handover. For example, after a terminal device receives the identification information, if identification information of a terminal device set to which the terminal device belongs matches the identification information, the terminal device performs handover.

670: The terminal device in the first terminal device set switches from the first access network device to the second access network device based on the handover indication information.

It may be understood that step 660 and step 670 may be combined with step 610 to step 650, or may be implemented as an independent method. For example, for a manner of determining the first terminal device set mentioned in step 660, refer to the related descriptions in step 620, or another determining manner may be used. This is not limited in this application.

According to the technical solution provided in this embodiment of this application, the first access network device may indicate a terminal device in a terminal device set (the first terminal device set) to perform handover, and handover times of terminal devices in different terminal device sets are different, so that the handover times of the terminal devices in the different terminal device sets can be controlled in an orderly manner, thereby alleviating congestion in a handover process. In addition, the first access network device sends the identification information of the terminal device and/or the quantity of terminal devices in the first terminal device set to the second access network device, and the second access network device may reserve, for the terminal device in the first terminal device set, the resource used for random access, so that the handover efficiency of the terminal device can be increased.

Optionally, the cell-level configuration information is broadcast by the first access network device to the one or more terminal devices based on the first information, and the first information further includes cell-level configuration information corresponding to the plurality of terminal device sets. Optionally, after determining the terminal device set to which the one or more terminal devices belong, the first access network device broadcasts the cell-level configuration information to the one or more terminal devices through a broadcast message. The cell-level configuration information is sent by the first access network device to the terminal device through the broadcast message. Compared with a manner in which all configuration information is sent to the terminal device by using dedicated signaling, this manner can reduce signaling overheads, thereby alleviating a signaling storm.

Cell-level configuration information of different terminal device sets may be the same or may be different. For example, different terminal device sets use different physical resources, and cell-level configuration information of the different terminal device sets is different.

When the cell-level configuration information of the different terminal device sets is different, the terminal device may store only cell-level configuration information that is of a terminal device set to which the terminal device belongs and that is determined when the first information is received. In a scenario, as the satellite moves, the remaining time/first time in which the first access network device can serve the terminal device constantly changes. Therefore, the terminal device set to which the terminal device belongs and that is determined by the terminal device also changes as the satellite moves. In another scenario, when the reference location of the terminal device set is a relative location that changes as the satellite moves, the terminal device set to which the terminal device belongs also changes as the satellite moves. For a manner in which the terminal device determines the terminal device set to which the terminal device belongs, refer to the related content in step 620.

In view of mobility of the satellite, at a moment at which the terminal device receives the first information used to determine the terminal device set to which the terminal device belongs and a moment at which the terminal device performs handover, the terminal device set to which the terminal device belongs changes, and cell-level configuration information received by the terminal device does not match a group of the terminal device during handover. This affects handover of the terminal device. Alternatively, the terminal device may not store cell-level configuration information of the terminal device set to which the terminal device belongs after the change. Consequently, handover of the terminal device is affected.

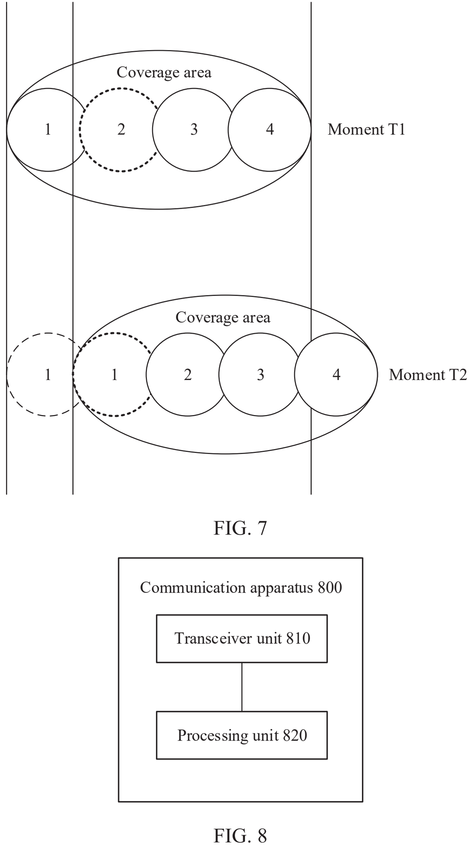

FIG. 7 is a diagram of a change of a terminal device set to which a terminal device belongs in an earth moving cell. At a moment T1, the terminal device determines, based on first information, that the terminal device belongs to a terminal device set 2. At a moment T2, the terminal device receives handover indication information sent by a first access network device, where the handover indication information indicates a terminal device in a terminal device set 1 to perform handover. Because a satellite moves, the terminal device set to which the terminal device belongs changes. In this case, the terminal device belongs to the terminal device set 1. However, the terminal device stores only cell-level configuration information of the terminal device set 2, and does not store cell-level configuration information of the terminal device set 1. Therefore, the terminal device cannot complete the handover, and the handover fails. Alternatively, the terminal device stores cell-level configuration information of all terminal device sets, but cell-level configuration information of different terminal device sets is different. A group to which the terminal device belongs when the terminal device receives the cell-level configuration information is inconsistent with a group to which the terminal device belongs when the terminal device performs handover. As a result, configuration information used when the terminal device performs handover does not match, and the handover fails.

When the cell-level configuration information of the different terminal device sets is different, the following provides a specific solution, to avoid a handover failure of a terminal device caused by a change of a terminal device set to which the terminal device belongs.

In an implementation, the first information includes first indication information, the first indication information indicates a valid time corresponding to the first terminal device set, and the terminal device in the first terminal device set belongs to the first terminal device set within the valid time. It may be understood that, after the terminal device determines that the terminal device belongs to the first terminal device set, the terminal device set to which the terminal device belongs remains unchanged within the valid time corresponding to the first terminal device set. The first information may include the first indication information and the information about the plurality of terminal device sets.

In an implementation, the first indication information indicates valid times respectively corresponding to the plurality of terminal device sets, and the valid times respectively corresponding to all the terminal device sets may be different or may be the same.

A terminal device set to which the terminal device belongs and that is determined by the terminal device based on the first indication information does not change with movement of a non-terrestrial network device within a valid time corresponding to the terminal device set.

In an implementation, the first information includes second indication information, and the second indication information indicates that the terminal device in the first terminal device set belongs to the first terminal device set before receiving the handover indication information including the identification information of the first terminal device set. It may be understood that the second indication information indicates that the terminal device in the first terminal device set belongs to the first terminal device set before receiving the handover indication information indicating the terminal device in the first terminal device set to perform handover. The first information may include the second indication information and the information about the plurality of terminal device sets.

A terminal device set to which the terminal device belongs and that is determined by the terminal device based on the second indication information does not change with movement of a non-terrestrial network device before the terminal device receives the handover indication information indicating the terminal device in the terminal device set to perform handover.

In an implementation, the first information includes third indication information, and the third indication information indicates that the terminal device in the first terminal device set belongs to the first terminal device set before receiving the new grouping information. It may be understood that the third indication information indicates that the terminal device in the first terminal device set belongs to the first terminal device set before receiving the new grouping information. The first information may include the third indication information and the information about the plurality of terminal device sets.

In an implementation, it is predefined in a protocol that after the terminal device determines, based on the first information, a terminal device set to which a terminal device belongs, the terminal device set to which the terminal device belongs remains unchanged until new information about the plurality of terminal device sets is received or until the handover indication information including the identification information of the terminal device set to which the terminal device belongs is received.

In an implementation, when the cell-level configuration information of different terminal device sets is different, the terminal device stores cell-level configuration information respectively corresponding to a plurality of terminal device sets/all terminal device sets, and the terminal device performs handover based on cell-level configuration information corresponding to a terminal device set to which the terminal device belongs during handover. As the satellite moves, even if the terminal device set to which the terminal device belongs changes, the terminal device stores cell-level configuration information of the terminal device set to which the terminal device belongs after the change, and performs handover based on the cell-level configuration information corresponding to the terminal device set to which the terminal device belongs during handover. Therefore, handover of the terminal device is not affected.

When the cell-level configuration information of different terminal device sets is the same, the terminal device stores the cell-level configuration information. As the satellite moves, even if the terminal device set to which the terminal device belongs changes, handover of the terminal device is not affected.

In an implementation, if the terminal device set to which the terminal device belongs changes before handover is completed, further, if the first access network device has not sent the handover request message to the second access network device, the terminal device reports, to the first access network device, an identifier of a changed terminal device set to which the terminal device belongs. If the first access network device has sent the handover request message to the second access network device, further, if the first access network device has not sent a handover command to the terminal device, the first access network device may cancel handover of the terminal device, for example, may not send the handover command to the terminal device. If the first access network device has sent the handover command to the terminal device, the terminal device may cancel handover. In this implementation, the handover indication information is delivered to the terminal device by using RRC signaling.

The foregoing describes the communication methods provided in embodiments of this application. The following describes an execution body for performing the foregoing communication methods.

FIG. 8 is a block diagram of a communication apparatus 800 according to an embodiment of this application. The apparatus may be used in the terminal device in embodiments of this application. The communication apparatus 800 includes:
a transceiver unit 810, configured to receive first information from a first access network device, where
the transceiver unit 810 is further configured to send second information to the first access network device, where the second information indicates a first terminal device set to which the apparatus belongs, and the first terminal device set is determined based on the first information; and
the transceiver unit 810 is further configured to receive handover indication information from the first access network device, where the handover indication information includes identification information of the first terminal device set; and
a processing unit 820, configured to switch from the first access network device to a second access network device based on the handover indication information.

Optionally, the first information includes information about a plurality of terminal device sets, and the first terminal device set belongs to the plurality of terminal device sets.

Optionally, the information about the terminal device set includes a time window corresponding to the terminal device set.

Optionally, the processing unit 820 is further configured to: when a first time belongs to a time window corresponding to the first terminal device set, determine that the apparatus belongs to the first terminal device set, where the first time is a time difference between a current moment and a moment at which the apparatus is disconnected from the first access network device.

Optionally, the processing unit 820 is further configured to: when a first time does not belong to a time window corresponding to any one of the plurality of terminal device sets, and a time difference between the first time and a start time or an end time of a time window corresponding to the first terminal device set is less than or equal to a first threshold, determine that the apparatus belongs to the first terminal device set, the first time is a time difference between a current moment and a moment at which the apparatus is disconnected from the first access network device, and the first time is greater than the start time of the time window corresponding to the first terminal device set.

Optionally, the information about the terminal device set includes information about a reference location of the terminal device set and a distance threshold corresponding to the reference location.

Optionally, the processing unit 820 is further configured to: when a distance between a current location of the apparatus and a first reference location of the first terminal device set is less than or equal to a distance threshold corresponding to the first reference location, determine that the apparatus belongs to the first terminal device set.

Optionally, the processing unit 820 is further configured to: when a distance between a current location of the apparatus and a reference location of any terminal device set in the plurality of terminal device sets is greater than a distance threshold corresponding to the reference location of the any terminal device set, and a distance between the current location and a first reference location of the first terminal device set is less than or equal to a second threshold, determine that the apparatus belongs to the first terminal device set.

Optionally, the processing unit 820 is further configured to: when a distance between a current location of the apparatus and a first reference location of the first terminal device set is less than or equal to a distance threshold corresponding to the first reference location, a distance between the current location and a second reference location of a second terminal device set is less than or equal to a distance threshold corresponding to the second reference location, and a distance between the current location and the first reference location is less than a distance between the current location and the second reference location, determine that the apparatus belongs to the first terminal device set, where the second terminal device set belongs to the plurality of terminal device sets.

Optionally, the first information includes first indication information, the first indication information indicates a valid time corresponding to the first terminal device set, and the apparatus belongs to the first terminal device set within the valid time.

Optionally, the first information includes second indication information, and the second indication information indicates that the apparatus belongs to the first terminal device set before receiving the handover indication information.

Optionally, the information about the terminal device set includes identification information of the terminal device set.

Optionally, the first access network device and the second access network device include a non-terrestrial network device; or the first access network device and the second access network device include a terrestrial network device associated with a non-terrestrial network device; or the first access network device includes a non-terrestrial network device, and the second access network device includes a terrestrial network device.

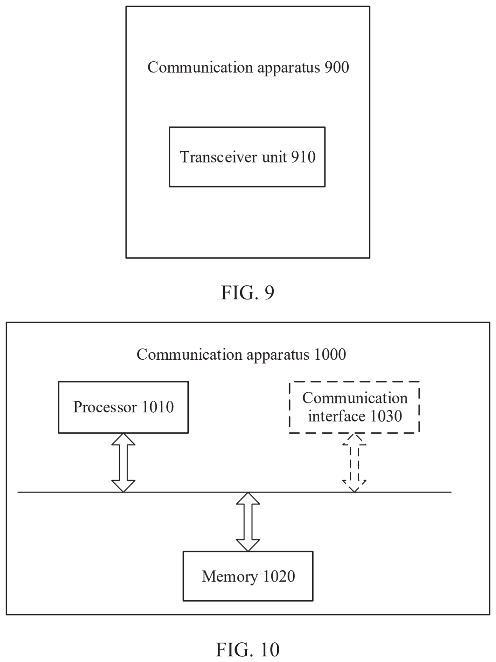

FIG. 9 is a block diagram of another communication apparatus 900 according to an embodiment of this application. The apparatus may be used in the first access network device in embodiments of this application. The communication apparatus 900 includes:
a transceiver unit 910, configured to send first information to one or more terminal devices, where the first information is used to determine a terminal device set to which each of the one or more terminal devices belongs, where
the transceiver unit 910 is further configured to receive second information from the one or more terminal devices, where the second information indicates the terminal device set to which each of the one or more terminal devices belongs;
the transceiver unit 910 is further configured to send a handover request message to a second access network device, where the handover request message includes identification information of a terminal device in the first terminal device set and/or a quantity of terminal devices in the first terminal device set, and the first terminal device set is indicated by the second information;
the transceiver unit 910 is further configured to receive a handover request acknowledgment message from the second access network device; and
the transceiver unit 910 is further configured to send handover indication information, where the handover indication information includes identification information of the first terminal device set.

Optionally, the first information includes information about a plurality of terminal device sets, and the first terminal device set belongs to the plurality of terminal device sets.

Optionally, the information about the terminal device set includes a time window corresponding to the terminal device set.

Optionally, the information about the terminal device set includes information about a reference location of the terminal device set and a distance threshold corresponding to the reference location.

Optionally, the first information includes first indication information, the first indication information indicates a valid time corresponding to the first terminal device set, and the terminal device in the first terminal device set belongs to the first terminal device set within the valid time.

Optionally, the first information includes second indication information, and the second indication information indicates that the terminal device in the first terminal device set belongs to the first terminal device set before receiving the handover indication information.

Optionally, the information about the terminal device set includes identification information of the terminal device set.

Optionally, the first access network device and the second access network device include a non-terrestrial network device; or the first access network device and the second access network device include a terrestrial network device associated with a non-terrestrial network device; or the first access network device includes a non-terrestrial network device, and the second access network device includes a terrestrial network device.

FIG. 10 is a block diagram of another communication apparatus 1000 according to an embodiment of this application. The communication apparatus 1000 includes a processor 1010, a memory 1020, and a communication interface 1030.

The memory 1020 is configured to store executable instructions.

The processor 1010 is coupled to the memory 1020 through the communication interface 1030. The processor 1010 is configured to invoke and run the executable instructions in the memory 1020, to implement the methods in embodiments of this application. The communication apparatus may be used in the terminal device or the first access network device in embodiments of this application. Optionally, the processor 1010 and the memory 1020 are integrated together.

The processor 1010 may be an integrated circuit chip and has a signal processing capability. In an implementation process, steps in the foregoing method embodiments can be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

Optionally, an embodiment of this application further provides a communication device. The communication device includes an input/output interface and a logic circuit. The input/output interface is configured to obtain input information and/or output information. The logic circuit is configured to: perform the method in any one of the method embodiments, and perform processing and/or generate the output information based on the input information.

An embodiment of this application further provides a communication system, including the terminal device and the first access network device in the foregoing method embodiments.

An embodiment of this application further provides a computer-readable storage medium. The computer-readable storage medium stores a computer program used to implement the methods in the foregoing method embodiments. When the computer program is run on a computer, the computer is enabled to implement the methods in the foregoing method embodiments.

An embodiment of this application further provides a computer program product. The computer program product includes computer program code. When the computer program code is run on a computer, the methods in the foregoing method embodiments can be performed.

An embodiment of this application further provides a chip, including a processor. The processor is connected to a memory, the memory is configured to store a computer program, and the processor is configured to execute the computer program stored in the memory, to enable the chip to perform the methods in the foregoing method embodiments.

It should be understood that, in embodiments of this application, unless otherwise stated or there is a logical conflict, terms and/or descriptions in different embodiments are consistent and may be mutually referenced, and technical features in different embodiments may be combined based on an internal logical relationship thereof, to form a new embodiment.

In embodiments of this application, numbers "first", "second", and the like are merely used to distinguish between different objects, for example, to distinguish between different access network devices or different information, and do not constitute a limitation on the scope of embodiments of this application. Embodiments of this application are not limited thereto.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification generally represents an "or" relationship between associated objects. In this application, the term "at least one" may represent "one" and "two or more". For example, at least one of A, B, and C may represent the following seventh cases: Only A exists, only B exists, only C exists, both A and B exist, both A and C exist, and both C and B exist, and A, B, C all exist.

In this application, "sending information to ... (a terminal device)" may be understood as that a destination end of the information is the terminal device, and may include directly or indirectly sending the information to the terminal device. "Receiving information from ... (a terminal device)" may be understood as that a source end of the information is the terminal, and may include directly or indirectly receiving the information from the terminal. Necessary processing, such as a format change, may be performed on the information between the source for information sending end and the destination end. However, the destination end can understand valid information from the source end. A similar expression in this application may be understood similarly.

A person of ordinary skill in the art may be aware that units and algorithm steps in the examples described with reference to embodiments disclosed in this specification may be implemented by electronic hardware or a combination of computer software and electronic hardware. Whether the functions are implemented by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a specific working process of the foregoing systems, apparatuses, and units, refer to a corresponding process in the foregoing method embodiments. Details are not described herein again.

In the several embodiments provided in this application, it should be understood that the disclosed system, apparatus, and method may be implemented in other manners. For example, the foregoing described apparatus embodiments are merely examples. For example, division into the units is merely logical function division, and there may be another division manner during actual implementation. For example, a plurality of units or components may be combined or integrated into another system, or a part of features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate components may or may not be physically separate, and components displayed as units may or may not be physical units, and may be located in one location, or may be distributed on a plurality of network units. A part or all of the units may be selected based on actual requirements to achieve the objectives of the solutions in embodiments.

In addition, functional units in embodiments of this application may be integrated into one processing unit, each of the units may exist alone physically, or two or more units are integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

## Claims

1. A communication method, wherein the method is applied to a terminal device, and the method comprises:
receiving first information from a first access network device;
sending second information to the first access network device, wherein the second information indicates a first terminal device set to which the terminal device belongs, and the first terminal device set is determined based on the first information;
receiving handover indication information from the first access network device, wherein the handover indication information comprises identification information of the first terminal device set; and
switching from the first access network device to a second access network device based on the handover indication information.

2. The method according to claim 1, wherein the first information comprises information about a plurality of terminal device sets, and the first terminal device set belongs to the plurality of terminal device sets.

3. The method according to claim 2, wherein the information about the terminal device set comprises a time window corresponding to the terminal device set.

4. The method according to claim 3, wherein the method further comprises:
when a first time belongs to a time window corresponding to the first terminal device set, determining that the terminal device belongs to the first terminal device set, wherein the first time is a time difference between a current moment and a moment at which the terminal device is disconnected from the first access network device.

5. The method according to claim 3, wherein the method further comprises:
when a first time does not belong to a time window corresponding to any one of the plurality of terminal device sets, and a time difference between the first time and a start time or an end time of a time window corresponding to the first terminal device set is less than or equal to a first threshold, determining that the terminal device belongs to the first terminal device set, the first time is a time difference between a current moment and a moment at which the terminal device is disconnected from the first access network device, and the first time is greater than the start time of the time window corresponding to the first terminal device set.

6. The method according to claim 2, wherein the information about the terminal device set comprises information about a reference location of the terminal device set and a distance threshold corresponding to the reference location.

7. The method according to claim 6, wherein the method further comprises:
when a distance between a current location of the terminal device and a first reference location of the first terminal device set is less than or equal to a distance threshold corresponding to the first reference location, determining that the terminal device belongs to the first terminal device set.

8. The method according to claim 6, wherein the method further comprises:
when a distance between a current location of the terminal device and a reference location of any terminal device set in the plurality of terminal device sets is greater than a distance threshold corresponding to the reference location of the any terminal device set, and a distance between the current location and a first reference location of the first terminal device set is less than or equal to a second threshold, determining that the terminal device belongs to the first terminal device set.

9. The method according to claim 6, wherein the method further comprises:
when a distance between a current location of the terminal device and a first reference location of the first terminal device set is less than or equal to a distance threshold corresponding to the first reference location, a distance between the current location and a second reference location of a second terminal device set is less than or equal to a distance threshold corresponding to the second reference location, and a distance between the current location and the first reference location is less than a distance between the current location and the second reference location, determining that the terminal device belongs to the first terminal device set, wherein the second terminal device set belongs to the plurality of terminal device sets.

10. The method according to any one of claims 1 to 9, wherein
the first information comprises first indication information, the first indication information indicates a valid time corresponding to the first terminal device set, and the terminal device belongs to the first terminal device set within the valid time.

11. The method according to any one of claims 1 to 9, wherein
the first information comprises second indication information, and the second indication information indicates that the terminal device belongs to the first terminal device set before receiving the handover indication information.

12. The method according to any one of claims 2 to 11, wherein
the information about the terminal device set comprises identification information of the terminal device set.

13. The method according to any one of claims 1 to 12, wherein
the first access network device and the second access network device comprise a non-terrestrial network device; or
the first access network device and the second access network device comprise a terrestrial network device associated with a non-terrestrial network device; or
the first access network device comprises a non-terrestrial network device, and the second access network device comprises a terrestrial network device.

14. A communication method, wherein the method is applied to a first access network device, and the method comprises:
sending first information to one or more terminal devices, wherein the first information is used to determine a terminal device set to which each of the one or more terminal devices belongs;
receiving second information from the one or more terminal devices, wherein the second information indicates the terminal device set to which each of the one or more terminal devices belongs;
sending a handover request message to a second access network device, wherein the handover request message comprises identification information of a terminal device in the first terminal device set and/or a quantity of terminal devices in the first terminal device set, and the first terminal device set is indicated by the second information;
receiving a handover request acknowledgment message from the second access network device; and
sending handover indication information, wherein the handover indication information comprises identification information of the first terminal device set.

15. The method according to claim 14, wherein the first information comprises information about a plurality of terminal device sets, and the first terminal device set belongs to the plurality of terminal device sets.

16. The method according to claim 15, wherein
the information about the terminal device set comprises a time window corresponding to the terminal device set.

17. The method according to claim 15, wherein
the information about the terminal device set comprises information about a reference location of the terminal device set and a distance threshold corresponding to the reference location.

18. The method according to any one of claims 14 to 17, wherein
the first information comprises first indication information, the first indication information indicates a valid time corresponding to the first terminal device set, and the terminal device in the first terminal device set belongs to the first terminal device set within the valid time.

19. The method according to any one of claims 14 to 17, wherein
the first information comprises second indication information, and the second indication information indicates that the terminal device in the first terminal device set belongs to the first terminal device set before receiving the handover indication information.

20. The method according to any one of claims 15 to 19, wherein
the information about the terminal device set comprises identification information of the terminal device set.

21. The method according to any one of claims 14 to 20, wherein
the first access network device and the second access network device comprise a non-terrestrial network device; or
the first access network device and the second access network device comprise a terrestrial network device associated with a non-terrestrial network device; or
the first access network device comprises a non-terrestrial network device, and the second access network device comprises a terrestrial network device.

22. A communication apparatus, comprising a unit or a module configured to perform the method according to any one of claims 1 to 13.

23. A communication apparatus, comprising a unit or a module configured to perform the method according to any one of claims 14 to 21.

24. A communication apparatus, comprising a processor and a memory, wherein the memory is configured to store a computer program, and the processor is configured to execute the computer program stored in the memory, so that the communication apparatus performs the method according to any one of claims 1 to 13 or claims 14 to 21.

25. A communication device, comprising an input/output interface and a logic circuit, wherein
the input/output interface is configured to obtain input information and/or output information; and
the logic circuit is configured to perform the method according to any one of claims 1 to 13 or claims 14 to 21, to perform processing and/or generate the output information based on the input information.

26. A communication system, comprising a terminal device and a first access network device, wherein the terminal device is configured to implement the method according to any one of claims 1 to 13, and the first access network device is configured to implement the method according to any one of claims 14 to 21.

27. A computer-readable storage medium, comprising:
the computer-readable medium stores a computer program; and
when the computer program is run on a computer, the computer is enabled to perform the method according to any one of claims 1 to 21.
